# EUROPEAN PATENT APPLICATION

(11) **EP 4 496 155 A1**
(43) Date of publication of application: **22.01.2025**
(21) Application number: 23769794.1
(22) Date of filing: 14.03.2023
(51) Int. Cl.: H01R 31/06, H01R 13/73

(54) **CONNECTOR ASSEMBLY WITH SOLID STATE COOLING, AND VEHICLE**

(30) Priority: 14.03.2022 CN 202210250044
(71) Applicant: Jilin Zhong Ying High Technology Co., Ltd., Jilin 130028 (CN)
(72) Inventor: WANG, Chao, Changchun, Jilin 130028 (CN)
(74) Representative: Habermann, Hruschka & Schnabel
(86) International application number: PCT/CN2023/081405
(87) International publication number: WO 2023/174292

(57) **Abstract**

A connector assembly with solid-state cooling and a vehicle, including at least one electrical connection framework and connectors connected to two ends thereof. Each connector includes a connection terminal to which at least one end of the electrical connection framework is electrically by means of welding or crimping. An outer periphery of the electrical connection framework is sleeved with a solid-state cooling protective layer. The present disclosure can reduce the high-temperature failure and the diameter of the electrical connection framework, prolong the service life of the connector assembly, improve the safety of the whole vehicle and shield the electromagnetic interference.

## Description

### RELATED APPLICATION

The present disclosure claims priority to Chinese Patent Application No. 202210250044.4, entitled "connector assembly with solid-state cooling, and vehicle", and filed to the China National Intellectual Property Administration on March 14, 2022, which is hereby incorporated by reference in its entirety.

### TECHNICAL FIELD

The present disclosure relates to the technical field of vehicle electrical appliances, and particularly to a connector assembly with solid-state cooling, and a vehicle.

### BACKGROUND

As new energy vehicles are increasingly popular, equipment and facilities to realize electrical connections for the new energy vehicles have also been developed. Since a connector assembly on a new energy vehicle should meet the requirement of fast current transmission, the transmission current is large, and the diameter of a cable on the connector assembly also increases, such that the assembling on a vehicle body can only adopt manual mounting, which causes the wastes of a labor cost and a time cost.

In addition, during normal use, very large current flows through the cable of the new energy vehicle, such that a lot of heat is generated in both the cable and attachment joints. A high temperature will occur due to excessive heat, and the connection position of a charging cable and the surrounding connectors and fasteners will be failed due to the high temperature, which will affect the normal use of the connector assembly, resulting in short circuit and open circuit, and even the danger of electric shock that is life-threatening.

The cable of the new energy vehicle will produce strong electromagnetic interference due to the large current. In order to reduce the influence of the electromagnetic interference, the cable usually uses a shielding net to shield the electromagnetic interference. At present, the conventional shielding net is braided with metal wires, and it is necessary to add a shielding braiding machine in the cable production equipment, such that the equipment price is high and a large area is occupied, resulting in a high price of the shielding cable of the connector assembly. In addition, the shielding technology for the connector is not perfect enough at present, such that the electrical appliances in the vehicle are interfered with and cannot be used.

Currently, there is no practical solution to the above problems. Therefore, the technical field of vehicle electrical appliances is in urgent need of a connector assembly with a small wire diameter and a low cable heat generation amount, which can realize automatic production and assembling.

### SUMMARY

The present disclosure aims to provide new technical solutions of a connector assembly with solid-state cooling, and a vehicle. The connector assembly with solid-state cooling of the present disclosure can reduce the failures of an electrical connection framework and a connection terminal caused by a high temperature during electrification, decrease the diameter of the electrical connection framework, prolong a service life of a connector, improve the safety of the whole vehicle, while shielding the electromagnetic interference.

According to a first aspect of the present disclosure, there is provided a connector assembly with solid-state cooling, including at least one electrical connection framework and connectors connected to two ends thereof. Each connector includes a connection terminal to which at least one end of the electrical connection framework is electrically by means of welding or crimping. An outer periphery of the electrical connection framework is sleeved with a solid-state cooling protective layer.

Optionally, the electrical connection framework includes a rigid solid conductor.

Optionally, a partial region of the electrical connection framework is flexible.

Optionally, the electrical connection framework includes at least one bent portion.

Optionally, the electrical connection framework has a cross section of polygonal shape, all corners of which are chamfered or rounded.

Optionally, the electrical connection framework has a cross section of one or more selected from the group consisting of a circular shape, an elliptical shape, a rectangular shape, a polygonal shape, an A shape, a B shape, a D shape, an M shape, an N shape, an O shape, a P shape, an S shape, an E shape, an F shape, an H shape, a K shape, an L shape, a T shape, a U shape, a V shape, a W shape, an X shape, a Y shape, a Z shape, a semi-arc shape, an arc shape and a wavy shape.

Optionally, a cross-sectional area of the electrical connection framework is 0.3 mm² to 240 mm².

Optionally, a thickness of the cooling protective layer accounts for 1% to 15% of an outer diameter of the electrical connection framework.

Optionally, the cooling protective layer is made of a heat-conductive tape, a heat-conductive insulation elastic rubber, a flexible heat-conductive pad, a heat-conductive filling agent or a heat-conductive insulation potting compound.

Optionally, the cooling protective layer is disposed on the outer periphery of the electrical connection framework by means of injection molding, extrusion molding, dipping molding, foaming, winding, weaving, pouring or wrapping.

Optionally, the cooling protective layer contains one or more selected from the group consisting of quartz glass, silicon carbide, mica, sand and gravel, diamond, silicon, graphene and derivatives thereof, and silicone grease.

Optionally, a cooling rate of the cooling protective layer to the electrical connection framework is 0.05 K/s to 12 K/s.

Optionally, a thickness of the cooling protective layer at the outer periphery of the electrical connection framework is not uniform.

Optionally, one of the connectors is a charging cradle.

The present disclosure further provides a vehicle, including the aforementioned connector assembly with solid-state cooling.

The present disclosure has the following advantageous effects:
1. The present disclosure solves the problem that the wire diameter of the charging wire harness at present is large. The solid-state cooling technology is used to reduce the heat generation amount of the electrical connection framework, so that the electrical connection framework can conduct a large current with a small wire diameter.
2. The present disclosure solves the problem that the automatic production and assembling cannot be realized due to the use of flexible cables for the high-voltage wire harnesses at present. The automatic fitting and assembling of the wire harness can be realized using the electrical connection framework which is at least partially rigid.
3. The present disclosure solves the problem of the low cooling efficiency of the liquid-cooled wire harness at present. The liquid-cooled wire harness is cooled through a liquid-cooled pipe at present, while in the present disclosure, the cooling protective layer directly contacts the electrical connection framework, so that the temperature of the electrical connection framework can be quickly decreased to realize a high current conduction.
4. The present disclosure solves the problem that the flexible cable contacts and rubs a vehicle shell, which cause the damage and short circuit of the insulation layer. The electrical connection framework can be arranged according to the shape of a vehicle body, while keeping a distance from the vehicle body to avoid rubbing the vehicle shell, thereby ensuring the service life of the electrical connection framework.
5. The electrical connection framework includes a flexible portion and a bent portion, so that the structure of the connector assembly can be reasonably designed according to the mounting environment of the vehicle body, which makes the mounting of the connector assembly on the vehicle body easier and saves the assembling time.

Other features and advantages of the present disclosure will become clear from the following detailed description of the exemplary embodiments of the present disclosure made with reference to the drawings.

### BRIEF DESCRIPTION OF THE DRAWINGS

The drawings, which are incorporated in and constitute a part of the specification, illustrate the embodiments of the present disclosure and together with the description, serve to explain the principles of the present disclosure.
FIG. 1 illustrates a structural schematic diagram of a connector assembly with solid-state cooling according to the present disclosure.
FIG. 2 illustrates a structural schematic diagram of an interior of a connector assembly with solid-state cooling according to the present disclosure.

Reference numerals of the main components:
1-connector; 2-electrical connection framework; 3-connection terminal; 4-cooling protective layer.

### DETAILED DESCRIPTION OF THE EMBODIMENTS

Various exemplary embodiments of the present disclosure will now be described in detail with reference to the drawings. It should be noted that the relative arrangements, the numerical expressions and the numerical values of components and steps set forth in these embodiments do not limit the scope of the present disclosure unless otherwise specified.

The following description of at least one exemplary embodiment is merely illustrative and is in no way intended to limit the present disclosure or the application or the use thereof.

Technologies, methods and devices known to those of ordinary skill in the art may not be discussed in detail, but they should be regarded as parts of the specification under appropriate circumstances.

In all examples illustrated and discussed here, any specific value should be interpreted as illustrative only rather than limiting. Thus, other examples of the exemplary embodiments may have different values.

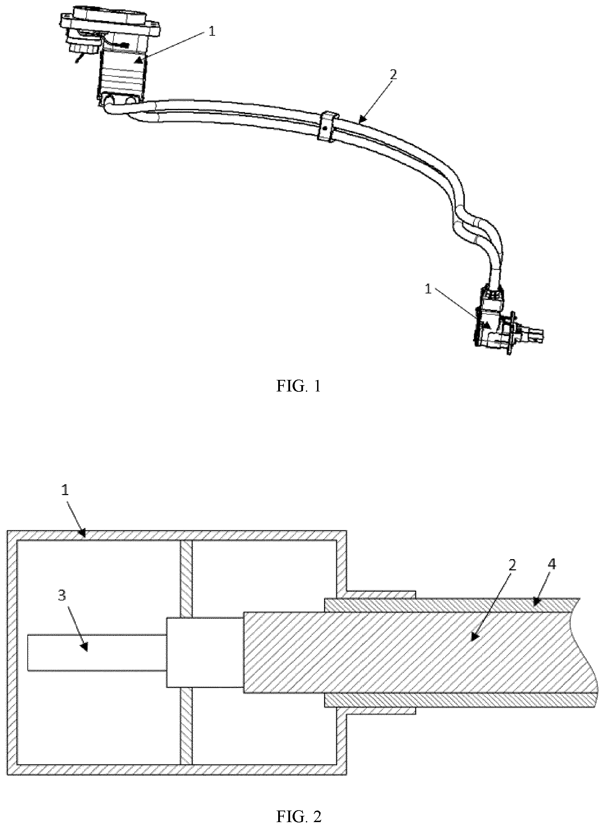

As illustrated in FIGS. 1 and 2, a connector assembly with solid-state cooling includes at least one electrical connection framework 2 and connectors 1 connected to two ends thereof. Each connector includes a connection terminal 3 to which at least one end of the electrical connection framework 2 is electrically by means of welding or crimping. An outer periphery of the electrical connection framework 2 is sleeved with a solid-state cooling protective layer 4.

At present, the charging cables on most of the connector assemblies use multi-core copper cables, which are heavy and expensive and become an obstacle to the popularization of new energy vehicles. In addition, although the multi-core cable is soft and can be easily machined and wired, the wire diameter is too large and the weight is heavy. During travelling of the vehicle, the cable will frequently rub a vehicle shell, thereby damaging the insulation layer of the cable and resulting in a high-voltage discharge, which will damage the vehicle or cause serious traffic accidents in severe cases. Thus, the multi-core cable structure may be replaced by the cable form of the electrical connection framework 2, such that the cable can be fixed on the vehicle shell, without rubbing the vehicle shell along with the vibration of the vehicle, thereby prolonging the service life of the connector assembly and reducing the accident rate. When the vehicle is charged, the current flowing through the electrical connection framework 2 is very large, leading to a rapid increase in the temperature of the electrical connection framework 2. An insulated solid or semi-solid-state cooling medium is filled between the protective shell having shielding effectiveness and the electrical connection framework 2 to cool the electrical connection framework 2, thereby reducing the temperature of the electrical connection framework 2 which generates heat, and enabling the connector assembly to work at a safe temperature.

In some embodiments, the electrical connection framework 2 is made of a rigid solid conductor material. That is, the conductor is formed by a wire, and the specific material may be copper or copper alloy, or aluminum or aluminum alloy which has excellent electrical conductivity.

In some embodiments, a partial region of the electrical connection framework 2 is a flexible body. The flexible body ensures that the electrical connection framework 2 can be bent at a large angle, so as to be conveniently disposed in the vehicle body with a large corner. Meanwhile, the flexible body can absorb the vibration of the electrical connection framework 2, so that the vibration of the electrical connection framework 2 will not affect the connector and other corresponding electrical devices on the vehicle body.

In some embodiments, the electrical connection framework 2 includes at least one bent portion to meet the requirement of mounting the electrical connection framework 2 on the vehicle body.

In some embodiments, a cross-sectional shape of the electrical connection framework 2 is a polygonal shape, all corners of which are chamfered or rounded. When the electrical connection framework 2 has edges, the edges may be rounded or chamfered to prevent the sharp parts thereof from damaging the contacted parts.

In some embodiments, a cross-sectional shape of the electrical connection framework is one or more selected from the group consisting of a circular shape, an elliptical shape, a rectangular shape, a polygonal shape, an A shape, a B shape, a D shape, an M shape, an N shape, an O shape, a P shape, an S shape, an E shape, an F shape, an H shape, a K shape, an L shape, a T shape, a U shape, a V shape, a W shape, an X shape, a Y shape, a Z shape, a semi-arc shape, an arc shape and a wavy shape. The electrical connection frameworks 2 with different cross-sectional shapes can be selected as needed. In some embodiments, a cross-sectional area of the electrical connection framework 2 is 0.3 mm² to 240 mm². The cross-sectional area of the electrical connection framework 2 determines the magnitude of the current that can be conducted by the electrical connection framework 2. Generally, the electrical connection framework 2 that realizes signal conduction has a small current and a small cross-sectional area. For example, a minimum cross-sectional area of the electrical connection framework 2 for signal transmission may be 0.3 mm². The electrical connection framework 2 that realizes power conduction has a large current and a large cross-sectional area. For example, a maximum cross-sectional area of a conductor of a vehicle battery wire harness may reach 240 mm².

In some embodiments, a thickness of the cooling protective layer 4 accounts for 1% to 15% of an outer diameter of the electrical connection framework 2. If the thickness of the cooling protective layer 4 is too small, the electrical conductivity is insufficient and the shielding effect cannot meet the requirement. If the thickness of the cooling protective layer 4 is too large, the materials will be wasted and the weight of the vehicle body will be increased. In order to verify the influence of different ratios of the thickness of the cooling protective layer 4 to the outer diameter of the electrical connection framework 2 on the electrical conductivity of the cooling protective layer 4, the inventor makes samples of the cooling protective layer 4 with different thicknesses and the same material, and tests the electrical conductivity respectively. The experimental results are shown in Table 1. In this embodiment, the electrical conductivity of the cooling protective layer 4 not less than 99% is an ideal value.

**Table 1: Influence of different ratios of the thickness of the cooling protective layer 4 to the outer diameter of the electrical connection framework 2 on the electrical conductivity**

| Ratios of different thicknesses of the cooling protective layer 4 to the outer diameter of the electrical connection framework 2 (%) | | | | | | | | | | | | | | |
|---|---|---|---|---|---|---|---|---|---|---|---|---|---|---|
| 0.8 | 1 | 2 | 3 | 4 | 5 | 7 | 9 | 10 | 11 | 12 | 13 | 14 | 15 | 16 |

| Electrical conductivity (%) | | | | | | | | | | | | | | |
|---|---|---|---|---|---|---|---|---|---|---|---|---|---|---|
| 98.9 | 99 | 99 | 99.1 | 99.1 | 99.2 | 99.3 | 99.4 | 99.5 | 99.6 | 99.7 | 99.8 | 99.8 | 99.9 | 99.9 |

As can be seen from Table 1, when the ratio of the thickness of the cooling protective layer 4 to the outer diameter of the electrical connection framework 2 is less than 1%, the electrical conductivity of the cooling protective layer 4 is less than 99%, which is unqualified. When the ratio of the thickness of the cooling protective layer 4 to the outer diameter of the electrical connection framework 2 is greater than 15%, the electrical conductivity has no significant increase, the shielding effect will not be further enhanced, and the thicker cooling protective layer 4 will increase the cost and the weight of the vehicle body. Therefore, the inventor prefers that the ratio of the thickness of the cooling protective layer 4 to the outer diameter of the electrical connection framework 2 is 1% to 15%.

In some embodiments, the cooling protective layer 4 is made of a heat-conductive tape, heat-conductive insulation elastic rubber, a flexible heat-conductive pad, a heat-conductive filling agent, or a heat-conductive insulation potting compound. The connector assembly having a solid-state cooling medium (also called the solid-state-cooled connector assembly) can reduce the failure of the electrical connection framework 2 and the connection terminal 3 caused by the high temperature due to electrification, decrease the diameter of the electrical connection framework 2, prolong the service life of the connector 1 and improve the safety of the whole vehicle.

The heat-conductive tape adopts highly heat-conductive rubber as a heat-conductive base material, and is backed with a pressure-sensitive heat-conductive adhesive on one side or both sides, so that the bonding is reliable and the strength is high. The heat-conductive tape is thin and flexible, and it is very easy to fit the surfaces of the device and the radiator. The heat-transfer tape can also adapt to the changes of cold and hot temperatures, thereby ensuring the consistency and stability of the properties.

The heat-conductive insulation elastic rubber adopts silicone rubber as a base material, and ceramic particles such as boron nitride and alumina as a filling agent, so that the heat-conductive effect is very good. Under the same conditions, the heat impedance of the heat-conductive insulation elastic rubber is smaller than those of other heat-conductive materials. The heat-conductive insulation elastic rubber is soft, clean, free of pollution and radiation, and highly insulative. The fiberglass reinforcement provides good mechanical properties, so that the heat-conductive insulation elastic rubber is puncture-resistant, shear-resistant and tear-resistant, and can be backed with the heat-conductive pressure-sensitive adhesive.

The flexible heat-conductive pad is a thick heat-conductive material. The base materials used at present are substantially silicone rubber and foamed rubber. The silicone rubber is characterized by good elasticity, and the foamed rubber is characterized by large deformation range, good heat-conductive effect and higher dielectric strength level.

The heat-conductive filling agent is a filler added to the base material to increase the heat conductivity coefficient of the material. The conventional heat-conductive fillers include aluminum oxide, magnesium oxide, zinc oxide, aluminum nitride, boron nitride, silicon carbide, etc.

The heat-conductive potting compound is an electronic glue mainly made of silicone rubber. The heat-conductive potting compound has excellent resistance to high and low temperatures, maintains elasticity in a temperature range of -60 °C to 200 °C, and effectively increases the waterproof and anti-seismic function of an electronic device after potting to ensure the application reliability of the electronic device.

In some embodiments, the cooling protective layer 4 is disposed on the outer periphery of the electrical connection framework by means of injection molding, extrusion molding, dipping molding, foaming, winding, weaving, pouring or wrapping.

The injection molding refers to a process of making a semi-finished part with a certain shape by operations such as pressurization, injection, cooling and separation of molten raw materials.

The extrusion molding is an efficient, continuous and low-cost molding processing method, which is an early technology in the processing of polymer materials. The extrusion molding is a molding processing method with the most varieties, the largest changes, high productivity, strong adaptability, wide uses and the largest proportion of output in the field of polymer processing.

The dipping molding refers to a process in which a workpiece is heated to a certain temperature, then dipping it into a dipping solution so that the dipping solution is solidified on the workpiece.

The foaming refers to the formation of a honeycomb or porous structure through the addition and reaction of physical or chemical foaming agents during foaming molding or in a foaming polymer material. The basic steps of the foam molding are the formation, the growth or expansion, and the stabilization of bubble nuclei. Under the given temperature and pressure, the solubility of the gas decreases until the saturation, thereby allowing excess gas to be removed and bubbles to be formed, thereby achieving nucleation.

The winding is to directly wind the heat-conductive tape around the outer periphery of the electrical connection framework 2.

The weaving is to organize a plurality of strip-shaped cooling media by interlacing or hooking them with each other, and fill them between the electrical connection framework 2 and an outer shell 5.

The pouring is to pour the unformed cooling medium between the electrical connection framework 2 and the outer shell 5 and wait for solidification.

The wrapping is to wrap the whole heat-conductive tape around the outer periphery of the electrical connection framework 2.

In some embodiments, the cooling protective layer 4 contains one or more selected from the group consisting of quartz glass, silicon carbide, mica, sand and gravel, diamond, silicon, graphene and derivatives thereof, and silicone grease.

Quartz glass is made by melting various pure natural quartz (e.g., crystal, quartz sand, etc.).

Silicon carbide is an inorganic substance with a chemical formula of SiC, which is made of raw materials such as quartz sand, petroleum coke (or coal coke), sawdust (salt is needed when producing green silicon carbide) through high temperature smelting in a resistance furnace.

Mica is a rock-forming mineral, which presents a hexagonal flaky crystal form and is one of the main rock-forming minerals.

Sand and gravel refer to a loose mixture of sand and gravel.

Diamond is a mineral composed of carbon, and it is the hardest natural substance in nature. Graphite can form synthetic diamond at a high temperature and a high pressure.

Silicon mainly exists in the form of oxides and silicates with high melting points, and it is also a material for semiconductors.

Graphene is a new material with a monolayer two-dimensional honeycomb lattice structure in which carbon atoms connected by sp² hybridization are closely packed.

Silicone grease is refined from silicone oil as a base oil thickening inorganic thickener, and it has good sealability, waterproofness, solvent resistance and creepage resistance.

In some embodiments, a cooling rate of the cooling medium to the electrical connection framework 2 is 0.05 K/s to 12 K/s. In order to verify the influence of the cooling rate of the cooling medium on a temperature rise of the electrical connection framework 2, the inventor selects ten electrical connection frameworks 2 with the same cross-sectional area, the same material and the same length and conducts the same current thereto, cools the electrical connection frameworks 2 with the cooling medium of different cooling rates, reads and records the temperature rise of each of the electrical connection frameworks 2 in Table 2.

The experimental method is to conduct the same current, in a closed environment, to each of the electrical connection frameworks 2 which adopts the cooling medium of different cooling rates, record a temperature before the current conduction and a stable temperature after the current conduction, and take an absolute value of a difference therebetween. In this embodiment, a temperature rise less than 50 K is a qualified value.

**Table 2: Influence of different cooling rates of the cooling medium on the temperature rise of the electrical connection framework 2**

| Cooling rate of the cooling medium (K/min) | | | | | | | | | | | | |
|---|---|---|---|---|---|---|---|---|---|---|---|---|
| 0.03 | 0.05 | 0.1 | 0.5 | 1 | 2 | 3 | 5 | 8 | 10 | 12 | 13 | 14 |

| Temperature rise of the electrical connection framework 2 (K) | | | | | | | | | | | | |
|---|---|---|---|---|---|---|---|---|---|---|---|---|
| 52.3 | 48.2 | 46.5 | 44.7 | 43.1 | 42.5 | 41.4 | 37.7 | 33.3 | 30.9 | 27.5 | 27.5 | 27.4 |

As can be seen from Table 2, when the cooling rate of the cooling medium is less than 0.05 K/s, the temperature rise of the electrical connection framework 2 is unqualified, and the temperature rise of the electrical connection framework 2 decreases as the cooling rate of the cooling medium increases. However, when the cooling rate of the cooling liquid is greater than 12 K/s, the temperature rise of the electrical connection framework 2 is not obviously decreased, and a higher cooling rate means a higher price and a more complicated process, so the inventor sets the cooling rate of the cooling medium as 0.05 K/s to 12 K/s.

In some embodiments, a thickness of the cooling protective layer 4 at the outer periphery of the electrical connection framework is not uniform. In the space of the vehicle body, different positions generate different amounts of heat, and the positions with good heat dissipation do not require too much cooling, so the thickness of the cooling protective layer 4 at these positions is set small, while the positions with poor heat dissipation need to be provided with a thick cooling protective layer 4. Therefore, the present disclosure creatively adopts the cooling protective layers 4 with different thicknesses according to different temperature rises of electrical connection frames 2, which not only ensures the temperature consistency of respective positions of the connector assembly, but also greatly saves the consumption of the material of the cooling protective layer 4 and reduces the cost of the connector assembly.

In some embodiments, one of the connectors 1 is a charging cradle. The two ends of the electrical connection framework 2 are connected to one of the connectors 1, respectively. In some cases, one of the connectors 1 may be a charging cradle, and the connector 1 at the other end is charged through the electrical connection framework 2.

The present disclosure further provides a vehicle including the connector assembly with solid-state cooling medium as described above.

Although some specific embodiments of the present disclosure have been described in detail by examples, it should be understood by those skilled in the art that the above examples are only for illustration rather than limiting the scope of the present disclosure. It should be understood by those skilled in the art that the above embodiments can be modified without departing from the scope and the spirit of the present disclosure. The scope of the present disclosure is defined by the appended claims.

## Claims

1. A connector assembly with solid-state cooling, comprising at least one electrical connection framework and connectors connected to two ends thereof, wherein each connector comprises a connection terminal to which at least one end of the electrical connection framework is electrically by means of welding or crimping, and an outer periphery of the electrical connection framework is sleeved with a solid-state cooling protective layer.

2. The connector assembly with solid-state cooling according to claim **1,** wherein the electrical connection framework comprises a rigid solid conductor.

3. The connector assembly with solid-state cooling according to claim **1,** wherein a partial region of the electrical connection framework is flexible.

4. The connector assembly with solid-state cooling according to claim **1,** wherein the electrical connection framework comprises at least one bent portion.

5. The connector assembly with solid-state cooling according to claim **1,** wherein the electrical connection framework has a cross section of polygonal shape, all corners of which are chamfered or rounded.

6. The connector assembly according to claim **1,** wherein the electrical connection framework has a cross section of one or more selected from the group consisting of a circular shape, an elliptical shape, a rectangular shape, a polygonal shape, an A shape, a B shape, a D shape, an M shape, an N shape, an O shape, a P shape, an S shape, an E shape, an F shape, an H shape, a K shape, an L shape, a T shape, a U shape, a V shape, a W shape, an X shape, a Y shape, a Z shape, a semi-arc shape, an arc shape and a wavy shape.

7. The connector assembly with solid-state cooling according to claim **1,** wherein a cross-sectional area of the electrical connection framework is 0.3 mm² to 240 mm².

8. The connector assembly with solid-state cooling according to claim **1,** wherein a thickness of the cooling protective layer accounts for 1% to 15% of an outer diameter of the electrical connection framework.

9. The connector assembly with solid-state cooling according to claim **1,** wherein the cooling protective layer is made of a heat-conductive tape, a heat-conductive insulation elastic rubber, a flexible heat-conductive pad, a heat-conductive filling agent or a heat-conductive insulation potting compound.

10. The connector assembly with solid-state cooling according to claim 9, wherein the cooling protective layer is disposed on the outer periphery of the electrical connection framework by means of injection molding, extrusion molding, dipping molding, foaming, winding, weaving, pouring or wrapping.

11. The connector assembly with solid-state cooling according to claim 1, wherein the cooling protective layer contains one or more selected from the group consisting of quartz glass, silicon carbide, mica, sand and gravel, diamond, silicon, graphene and derivatives thereof, and silicone grease.

12. The connector assembly with solid-state cooling according to claim 1, wherein a cooling rate of the cooling protective layer to the electrical connection framework is 0.05 K/s to 12 K/s.

13. The connector assembly with solid-state cooling according to claim 1, wherein a thickness of the cooling protective layer at the outer periphery of the electrical connection framework is not uniform.

14. The connector assembly with solid-state cooling according to claim 1, wherein one of the connectors is a charging cradle.

15. A vehicle, comprising the connector assembly with solid-state cooling according to any one of claims 1 to 14.
